# FASCICULE DE BREVET EUROPEEN

(11) **EP 3 953 569 B1**
(45) Date de publication et mention de la délivrance du brevet: **11.01.2023**
(21) Numéro de dépôt: 20725784.1
(22) Date de dépôt: 10.04.2020
(51) Int. Cl.: F01D 11/12, F01D 21/00

(54) **PROCEDURE DE DETECTION D'UNE ASPERITE SUR UNE COUCHE ABRADABLE DANS UN CARTER DE SOUFFLANTE**
VERFAHREN ZUM ERFASSEN EINER RAUHEIT IN EINER ABREIBBAREN SCHICHT IN EINEM BLÄSERGEHÄUSE
METHOD FOR DETECTING A ROUGHNESS IN AN ABRADABLE LAYER IN A FAN CASING

(30) Priorité: 12.04.2019 FR 1903936
(43) Date de publication de la demande: 16.02.2022
(73) Titulaire: Safran Aircraft Engines, 75015 Paris (FR)
(72) Inventeur: BOUROLLEAU, Clément, 77550 Moissy-Cramayel (FR); BRANCO, Alexandre, 77550 Moissy-Cramayel (FR); DOMINGUES, Serge, 77550 Moissy-Cramayel (FR); FIORE, Vincent, Pascal, 77550 Moissy-Cramayel (FR); SIRAJ, Anwer, 77550 Moissy-Cramayel (FR)
(74) Mandataire: Gevers & Orès
(86) Numéro de dépôt international: PCT/FR2020/000108
(87) Numéro de publication internationale: WO 2020/208316

(56) Documents cités:
- EP-A1- 2 990 660
- EP-A1- 3 263 844
- EP-A2- 2 962 844
- US-A1- 2016 061 049

## Description

### Domaine technique de l'invention

La présente invention concerne un procédé de détection d'au moins une aspérité sur une face d'une couche annulaire en matériau abradable dans un carter de soufflante. La présente invention concerne aussi un procédé de réparation d'une aspérité ainsi qu'un carter de soufflante pour une turbomachine d'aéronef.

Par aspérité, il est entendu une inégalité de surface due à un enlèvement de matière, local et de taille micrométrique, sur la face de la couche annulaire.

### Art antérieur

L'art antérieur est illustré par les documents EP-A1-2 990 660, EP-A1-3 263 844, US-A1-2016061049, EP-A2-2 962 844.

Un carter de soufflante assemblé sur une turbomachine d'aéronef a pour fonction principale de garantir la rétention en cas d'ingestion de débris ou de perte d'aube de soufflante.

Certaines des fonctions secondaires d'un carter de soufflante sont d'assurer la continuité mécanique en efforts et moments entre une manche d'entrée d'air et une virole de carter intermédiaire, de permettre la fixation des panneaux de veine, comme la virole acoustique amont, la cartouche du support de couche abradable et le panneau acoustique aval.

D'autres fonctions du carter de soufflante sont de permettre la fixation des équipements et supports, de tenir les spécifications au feu et aux fuites et de permettre la continuité du courant électrique pour la tenue contre la foudre. Par exemple, sur une turbomachine, un nombre de dix-huit aubes de soufflante peuvent être installées en vis-à-vis de la couche abradable. Cette couche abradable, fréquemment en matériau poreux de couleur uni, s'effrite en fonctionnement afin de garantir une veine aérodynamique optimale grâce aux aubes de soufflante qui viennent en contact avec la couche.

Hors fonctionnement, il est nécessaire de garantir un certain jeu pour assurer le montage des aubes de soufflante dans le carter de soufflante.

En fonctionnement, l'inertie de la roue de soufflante qui est composée entre autres, de toutes les aubes de soufflante, fait que la roue s'écarte afin de combler le jeu de montage mais également afin de créer une veine aérodynamique optimale.

Pour créer cette veine aérodynamique, les aubes de soufflante viennent en contact avec la couche abradable et l'effrite au juste besoin.

En fonctionnement, il peut arriver qu'en s'effritant, certains décollements de matériau poreux abradable se désolidarisent du reste de la surface.

Ce n'est pas la seule source d'effritement de la couche abradable car, en fonctionnement, il peut arriver que la soufflante aspire des corps étrangers, ce qui peut endommager plus ou moins anormalement la surface abradable. Ces surfaces manquantes ou aspérités, de l'ordre de quelques micromètres, sur une face de la couche abradable séquentiellement en vis-à-vis des aubes ont besoin d'être systématiquement vérifiées afin de les placer dans une des catégories suivantes.

La première catégorie est constituée par des petites aspérités micrométriques formant des aspérités cosmétiques mineures qui n'ont pas besoin d'être retouchées.

La deuxième catégorie est constituée par des aspérités plus profondes mais toujours d'une taille micrométriques et localisées en formant des aspérités cosmétiques moyennes qui ont besoin d'être retouchées sans concerner un remplacement local de la couche abradable.

La troisième catégorie est constituée par des aspérités plus profondes ou aspérités cosmétiques majeures qui nécessitent un remplacement de la couche abradable dans une zone locale plus ou moins importante.

Chaque aspérité ou surface manquante est placée dans une catégorie en fonction de ses caractéristiques dimensionnelles, principalement la dimension et la profondeur. Il est donc nécessaire qu'un opérateur soit disponible avec le matériel spécifique et contrôle chaque zone une à une.

Ainsi, la couche abradable doit rester intègre afin d'assurer ses fonctions vis-à-vis des aubes de soufflante. Par opposition, une couche d'usure, pouvant revêtir la couche abradable, se dégrade dans toute son épaisseur lorsqu'elle est endomagée. Une telle dégradation est possible puisque la couche d'usure n'a pas de rôle essentiel dans le fonctionnement de la turbomachine contrairement à la couche abradable.

Par conséquent, le problème à la base de l'invention est de détecter une ou des aspérités sur une face d'une couche annulaire en matériau abradable dans un carter de soufflante pour une turbomachine d'aéronef et d'identifier la profondeur des aspérités sans avoir besoin de démonter la couche abradable du carter de soufflante.

### Résumé de l'invention

L'invention propose un procédé de détection d'au moins une aspérité sur une face d'une couche annulaire en matériau abradable dans un carter de soufflante pour une turbomachine d'aéronef, caractérisé en ce qu'il comporte :
- une étape de dépôt sur ladite face de la couche abradable d'un premier revêtement et d'au moins un deuxième revêtement recouvrant le premier revêtement déposé directement sur la couche abradable, chaque premier ou deuxième revêtement présentant une épaisseur respective prédéterminée précisément mesurée et un aspect physique les différenciant l'un de l'autre,
- une étape d'observation de la couche abradable ainsi revêtue, une apparition locale apparition locale du premier revêtement sur ladite face étant représentative d'une aspérité nécessitant une retouche locale et une disparition locale du premier revêtement après disparition du deuxième revêtement sur ladite face étant représentative d'une aspérité nécessitant un remplacement local de la couche abradable autour de l'aspérité.

La proposition de la présente invention consiste à superposer au moins deux revêtements, avantageusement sous la forme d'une couche de peinture respective, sur la couche abradable, l'épaisseur totale des revêtements étant équivalente au niveau de profondeur défini d'une aspérité au-dessus de laquelle une aspérité grave est détectée et l'épaisseur du deuxième revêtement superposé au premier revêtement correspondant à une aspérité moins grave à traiter.

Les deux revêtements, avantageusement sous la forme d'une couche de peinture respective, peuvent recouvrir la face en vis-à-vis d'une aube de la roue à aubes et forment ainsi la face la plus externe de la couche abradable. L'effet technique obtenu est de détecter une ou des aspérités ainsi que leur niveau de profondeur par simple observation visuelle de la couche abradable et de ses revêtements sans démontage du carter de soufflante.

Il est ainsi obtenu, par simple observation visuelle, une détection et une graduation de l'aspérité ou des aspérités présentes notamment sur la face en vis-à-vis de l'aube alors intégrant les deux revêtements, avantageusement sous la forme d'une couche de peinture respective. La détection d'une aspérité ou des aspérités en est ainsi accélérée et rendue plus précise.

Après une telle observation visuelle, la couche abradable est prête à être traitée selon son niveau de profondeur, ce qui représente un gain de temps en ne nécessitant pas une deuxième détection de confirmation des aspérités, par exemple en bureau d'études.

Il est même possible qu'un opérateur du carter de soufflante puisse prendre connaissance lui-même du niveau de profondeur d'une aspérité, une telle observation visuelle ne requérant aucune compétence spécifique. Des retours en service après-vente injustifiés sont ainsi évités, ce qui représente un gain de temps et un moindre coût. Les retouches effectuées sur une couche abradable sont effectuées uniquement dans les cas nécessaires donc toujours à bon escient.

Du fait de la présence de deux revêtements, avantageusement de peinture, pour une aspérité creusée, il est possible de différencier le niveau de profondeur de trois types d'aspérités à savoir un niveau d'aspérité cosmétique faible quand le premier revêtement reste recouvert par le deuxième revêtement au niveau de l'aspérité, un niveau d'aspérité cosmétique plus fort quand le premier revêtement est visible par enlèvement du deuxième revêtement au niveau de l'aspérité et un troisième niveau le plus grave quand le premier revêtement a lui aussi disparu au niveau de l'aspérité.

De plus, la présence de deux revêtements, avantageusement sous la forme d'une couche de peinture respective, sur la face de la couche abradable en vis-à-vis de la roue à aubes renforce son esthétisme.

Le procédé de détection ne demande pas d'action compliquée et ne diffère pas fondamentalement d'un revêtement, notamment un revêtement de peinture de la face de la couche abradable en vis-à-vis d'une aube, à la différence que l'épaisseur du revêtement est à contrôler précisément. Avantageusement, préalablement à la mise en œuvre de l'étape de dépôt, il est procédé à une étape de définition d'un premier niveau et d'au moins un deuxième niveau de profondeur d'aspérité affectant la couche abradable, les premier et deuxième niveaux de profondeur étant mesurés à partir de ladite face et représentatifs d'une nécessité, pour le premier niveau, d'un remplacement local de la couche abradable autour de l'aspérité ou, pour le deuxième niveau, d'une nécessité d'une retouche locale au niveau de l'aspérité, l'épaisseur dudit au moins un deuxième revêtement étant égale au deuxième niveau de profondeur et l'épaisseur du premier revêtement recouvert étant égale au premier niveau de profondeur minoré de l'épaisseur dudit au moins un deuxième revêtement,

Avantageusement, quand une aspérité est visible sur ladite face avec le premier revêtement recouvert par le deuxième revêtement dans cette aspérité, il est conclu à une présence d'une aspérité ne nécessitant aucune retouche locale.

Avantageusement, le premier niveau de profondeur d'aspérité est au moins supérieur à 0,5 millimètres et le deuxième niveau de profondeur d'aspérité est au moins supérieur à 0,2 millimètres en étant inférieur à 0,5 millimètres. Avantageusement, le premier revêtement et ledit au moins un deuxième revêtement sont sous forme d'une couche de peinture respective, une enduction de ladite face de la couche abradable par les premier et deuxième revêtements étant réalisée par un procédé de type laquage ou thermolaquage. Avant dépose, il est nécessaire de préparer la surface par sablage avec un grain fin afin de créer de petits points d'accrochage qui faciliteront l'adhérence des revêtements.

La dépose peut être réalisée par un bras robotique qui tourne autour de l'axe moteur, l'opération étant effectuée avec des conditions contrôlées précisément, comme par exemple un débit de projection, une vitesse de rotation du bras, une humidité et une température.

Après dépose de chacune des couches de peinture, un passage en autoclave est requis pour que le revêtement polymérise et que l'on obtienne une couche uniforme d'épaisseur constante, ce passage s'effectuant pendant, par exemple, 30 minutes à 200 °C, le temps variant en fonction de l'épaisseur de la couche déposée.

La principale difficulté de mise en œuvre du procédé selon l'invention est le contrôle de l'épaisseur de chacun des revêtements en correspondance avec le niveau de profondeur d'une aspérité correspondant à un niveau donné. Par exemple, la superposition des deux revêtements ne doit pas modifier l'épaisseur de chacun des revêtements et il ne doit pas exister de mélange au moins partiel entre les deux revêtements. De plus, quand, par exemple, non soumis à un effritement ou à une altération quelconque, l'épaisseur des revêtements doit rester constant et ne pas varier pendant la durée de vie de la couche abradable.

Il pouvait être connu de peindre une face d'une couche abradable en vis-à-vis d'une aube mais sans utiliser deux revêtements avec des aspects physiques différents et aisément reconnaissables l'un de l'autre. Ceci n'avait qu'un but esthétique et le cas échéant de protection de la couche abradable mais n'avait aucun rôle dans le suivi d'aspérités créées par effritement ou altération sur la couche abradable, ce que permet la mise en œuvre du procédé selon la présente invention.

Avantageusement, le premier revêtement et ledit au moins un deuxième revêtement présentent une colorimétrie différente.

Avantageusement, le premier revêtement et ledit au moins un deuxième revêtement forment respectivement une couche d'usure du carter de soufflante, chaque revêtement étant avantageusement apte à se dégrader dans toute son épaisseur.

L'invention concerne un procédé de réparation d'une aspérité sur une face d'une couche annulaire en matériau abradable dans un carter de soufflante pour une turbomachine d'aéronef, caractérisé en ce que ladite au moins une aspérité ayant été détectée conformément à un tel procédé de détection, une apparition locale du premier revêtement au niveau d'une aspérité sur ladite face est suivie par une retouche locale de l'aspérité et une disparition locale du premier revêtement après disparition du deuxième revêtement au niveau d'une aspérité sur ladite face est suivie d'un remplacement local de la couche abradable autour de l'aspérité.

L'invention concerne aussi un carter de soufflante pour une turbomachine d'aéronef comprenant une couche annulaire en matériau abradable caractérisé en ce que ladite face de la couche en matériau abradable est recouverte par au moins deux revêtements, chaque premier ou deuxième revêtement présentant une épaisseur respective prédéterminée précisément mesurée et un aspect physique les différenciant l'un de l'autre, permettant la mise en œuvre d'un tel procédé de détection d'au moins une aspérité sur ladite face de la couche abradable.

Un tel carter de soufflante apporte une amélioration significative en termes de satisfaction et de sécurisation de l'utilisateur, celui-ci sachant exactement évaluer la profondeur des aspérités se produisant par effritement de la couche abradable et leurs modes et coûts de réparation, étant donné qu'une aspérité est détectée avec son niveau de profondeur et subit le traitement le mieux adapté à son niveau de profondeur.

Avantageusement, le premier revêtement et ledit au moins un deuxième revêtement sont des couches de peinture, l'aspect physique des premier et deuxième revêtements étant donné par un des paramètres suivants pris unitairement ou en combinaison : une couleur, un teint, une texture.

L'invention concerne une turbomachine d'aéronef caractérisée en ce qu'elle comporte un tel carter de soufflante.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] la figure 1 est une représentation schématique d'une vue en coupe d'une soufflante d'une turbomachine d'aéronef selon l'état de la technique,
[Fig. 2] la figure 2 est une représentation schématique d'une vue en perspective d'un carter de soufflante selon l'état de la technique,
[Fig. 3] la figure 3 est une représentation schématique d'une vue coupe partielle à caractère schématique d'un carter de soufflante selon l'état de la technique,
[Fig. 4] la figure 4 est une représentation schématique de deux vues en coupe à caractère schématique d'une couche abradable destinée à un carter de soufflante respectivement selon l'état de la technique sans revêtement de la couche abradable et selon la présente invention, avec, dans ce dernier cas, une face en vis-à-vis d'au moins une aube de soufflante étant revêtue de deux revêtements, avantageusement sous la forme d'une couche de peinture respective, avec des caractéristiques visibles différentes pour une détection et une classification de profondeur d'une ou de plusieurs aspérités.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

### Description détaillée de l'invention

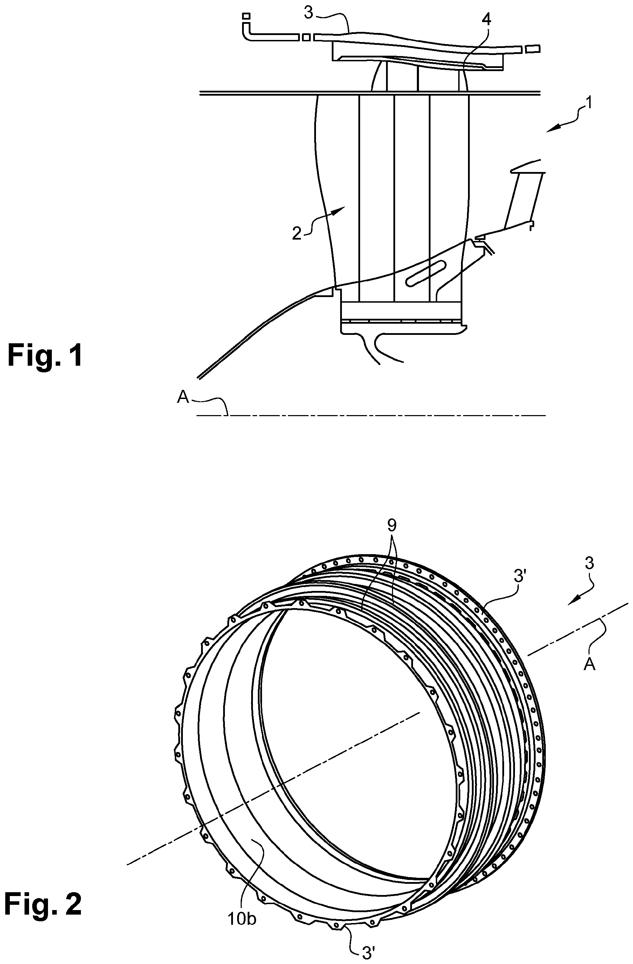

La figure 1 représente partiellement une soufflante d'une turbomachine d'aéronef.

De façon classique, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

La soufflante 1 comporte une roue 2 à aubes qui est entourée par un carter 3 de soufflante, encore appelé carter de rétention du fait de sa fonction de rétention des aubes en cas de rupture de celles-ci, ou en cas d'entrée de débris dans la soufflante.

Comme cela est visible sur la figure 2, le carter 3 de soufflante présente une forme générale cylindrique d'axe de révolution A.

Il comprend une bride annulaire de fixation 3' à chacune de ses extrémités axiales. Ces brides 3' sont utilisées pour fixer le carter 3 à des parois annulaires de la nacelle de la turbomachine.

Comme montré à cette figure 2, une couche en matériau abradable 10b est présente à l'intérieur du carter 3 de soufflante en étant de révolution dans le carter 3 de soufflante.

Le carter 3 de soufflante s'étend donc autour de la roue 2 à aubes de soufflante. Il comprend donc une surface cylindrique interne qui est munie d'une couche annulaire 10 de matière abradable.

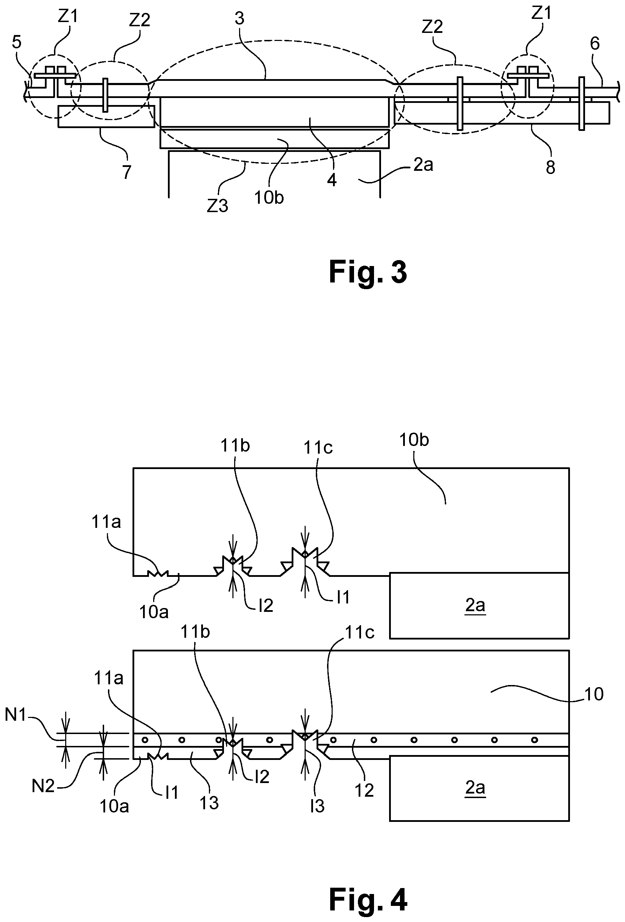

Comme visible à la figure 3, la couche annulaire 10b de matière abradable, ci-après dénommée couche abradable 10b s'étend autour et à faible distance radiale d'une 2a des aubes, ceci séquentiellement lors de la rotation de la roue 2 à aubes. Les aubes 2a peuvent en fonctionnement et successivement frotter contre la couche abradable 10b et l'user par frottement. Ceci vaut pour une couche abradable 10b de l'état de la technique comme pour une couche abradable 10 selon la présente invention et montrée à la figure 4.

Ceci permet d'optimiser les jeux radiaux entre les aubes 2a et le carter 3 de soufflante qui l'entoure et donc de limiter les fuites de gaz aux sommets ou extrémités radialement externes des aubes, et ainsi d'optimiser les performances de la turbomachine.

Dans la technique actuelle comme dans les modes de réalisation de la présente invention, la couche abradable 10b peut être supportée par une cartouche de support 4 pleine ou présentant une structure en nid d'abeille. Cette cartouche 4 est généralement rivetée ou vissée sur le carter 3 de soufflante.

Le carter 3 de soufflante est lié d'une part à une manche d'entrée d'air 5, et, d'autre part, à une virole de carter intermédiaire 6. Il porte également une virole acoustique amont 7 et un panneau acoustique aval 8.

Sans que cela soit essentiel dans le cadre de la présente invention, il peut être reconnu sur le carter 3 de soufflante trois types de zone.

Le premier type de zones dites zones Z1 regroupe les zones de brides en comprenant une zone de bride amont et une zone de bride aval. La zone de bride amont comprend la liaison entre le carter 3 de soufflante et la manche d'entrée d'air 5 et la zone de bride aval comprend la liaison entre le carter 3 de soufflante et la virole de carter intermédiaire 6.

Le deuxième type de zones dites zones Z2 regroupe les zones structurales en comprenant une zone structurale amont et une zone structurale aval. La zone structurale amont est située au niveau de la virole acoustique amont 7 et la zone structurale aval est située au niveau du panneau acoustique aval 8.

Le troisième type de zone comporte une unique zone de rétention, dite zone Z3. Cette zone Z3 assure la fonction primaire du carter 3 de soufflante et garantit la tenue mécanique statique et dynamique de l'ensemble en assurant une dynamique rapide. La troisième zone Z3 loge la portion médiane du carter 3 de soufflante, la cartouche de support 4 de la couche abradable 10b et la couche abradable 10b.

Comme mentionné précédemment, et en regard de la figure 4, la couche abradable 10 ou 10b peut être endommagée, pour diverses raisons et pas seulement du fait de sa coopération avec la roue à aubes, par formation d'une surface localement creusée formant une aspérité 11a, 11b, 11c locale dans la couche et ceci selon plusieurs niveaux de profondeur requérant respectivement dans le sens d'une profondeur croissante, aucune réparation, une retouche locale ou un travail plus important de remplacement local de la couche d'abradable.

Il est difficile à l'œil nu de différencier des aspérités 11a, 11b, 11c présentant différents niveaux de profondeur. Il est alors nécessaire de démonter le carter de soufflante pour avoir accès à la couche abradable 10 ou 10b, ce que veut précisément éviter la présente invention.

En se référant principalement à la figure 4 mais aussi à la figure 3, la présente invention concerne un procédé de détection d'au moins une aspérité sur une face d'une couche annulaire en matériau abradable 10 dans un carter 3 de soufflante pour une turbomachine d'aéronef en identifiant sa profondeur dont dépend les possibles travaux de réparation à entreprendre sur la couche abradable 10.

La face 10a présentant cette ou ces aspérités, avantageusement un manque de matière formant une aspérité 11a, 11b, 11c plus ou moins large et/ou plus ou moins profonde, de profondeurs respectives référencées I1, I2 et I3 est la face se trouvant en vis-à-vis 10a séquentiellement d'une 2a des aubes d'une roue à aubes de soufflante comme montré précédemment à la figure 3.

La ou les aspérités sont provoquées, notamment mais pas seulement, par un effritement local sur la face en vis-à-vis 10a provoquant une création sur la face 10a, en vis-à-vis d'une aube 2a, d'une aspérité 11a, 11b, 11c d'une profondeur respective I1, I2, I3 dans la couche abradable 10.

A la figure 4, il est montré une comparaison entre une couche abradable 10b selon l'état de la technique et une couche abradable 10 selon la présente invention, la couche abradable 10b selon l'état de la technique étant la couche supérieure et la couche abradable 10 selon la présente invention étant la couche inférieure sur la figure 4.

Dans les deux cas, il est montré trois types d'aspérité sous forme d'une aspérité 11a, 11b, 11c respective. Il est bien entendu possible qu'il existe d'autres aspérités avec des aspérités intermédiaires ou même des aspérités plus profondes.

Le procédé conforme à la présente invention, peut commencer par une étape de définition, étape qui n'est pas obligatoirement nécessaire pour sa mise en œuvre.

Lors de cette étape, il est effectué une définition d'un premier N1+N2 et d'au moins un deuxième niveau N2 de profondeur d'aspérité affectant la couche abradable 10.

Les premier et au moins deuxième niveaux N1+N2, N2 de profondeur sont mesurés à partir de ladite face 10a et représentatifs d'une nécessité, pour le premier niveau N1+N2, d'un remplacement local de la couche abradable 10 autour de l'aspérité 11c ou, pour le deuxième niveau N2, d'une nécessité d'une retouche locale au niveau de l'aspérité 11b.

A la figure 4, l'aspérité 11a de profondeur la plus petite, par exemple d'une profondeur I1 de 0 à 0,2 millimètres correspond à un défaut cosmétique mineur ne nécessitant aucun traitement, l'aspérité 11b de profondeur moyenne I2, par exemple d'une profondeur de 0,2 à 0,5 millimètres correspond à un défaut cosmétique majeur nécessitant une retouche locale et l'aspérité 11c d'épaisseur la plus grande I3, par exemple d'une profondeur supérieure à 0,5 millimètres, correspond à une aspérité grave nécessitant un remplacement local de la couche abradable 10.

Selon l'état de la technique, il n'était pas possible de différencier ces aspérités 11a, 11b, 11c les unes des autres, en particulier une aspérité 11b moyenne d'une aspérité 11c la plus grande.

Pour une couche abradable 10 selon la présente invention, comme montré à la partie inférieure de la figure 4, il est effectué une étape de dépôt sur la face 10a de la couche abradable 10 en vis-à-vis d'une aube 2a d'un premier revêtement 12 et d'au moins un deuxième revêtement 13, avantageusement sous forme d'une couche de peinture, recouvrant le premier revêtement 12, ce premier revêtement 12 étant déposé directement sur la couche abradable. Chaque premier 12 ou deuxième revêtement 13 présente une épaisseur respective N1, N2 prédéterminée précisément mesurée et un aspect physique les différenciant l'un de l'autre pour reconnaître quel revêtement est visible de la face en vis-à-vis 10a et, le cas échéant, reconnaître si le premier revêtement 12 a disparu localement.

L'épaisseur N2 dudit au moins un deuxième revêtement 13 étant le plus externe à la couche abradable 10 peut être égale au deuxième niveau de profondeur N2 et l'épaisseur N1 du premier revêtement 12 recouvert le plus interne à la couche abradable 10 peut être égale au premier niveau N1+N2 de profondeur minoré de l'épaisseur N2 dudit au moins un deuxième revêtement 13.

Dans le cas précédemment mentionné, pour les petites, moyennes et grandes aspérités 11a, 11b, 11c avec une profondeur respectivement inférieure à 0,2 millimètres, comprise entre 0,2 et 0,5 millimètres, et supérieure à 0,5 millimètres, l'épaisseur du deuxième revêtement 13 est de 0,2 millimètres et l'épaisseur N1 du premier revêtement 12 est de 0,5-0,2 millimètres soit 0,3 millimètres.

Le premier revêtement 12 et l'au moins un deuxième revêtement 13 forment respectivement une couche d'usure du carter de soufflante, autour notamment de la couche abradable 10. Ainsi, selon l'invention, le premier revêtement 12 et le deuxième revêtement 13 se dégrade respectivement dans toute son épaisseur avant la couche abradable 10. Préférentiellement, le deuxième revêtement 13 se dégrade dans un premier temps dans toute son épaisseur, puis le premier revêtement 12 se dégrade dans un second temps dans toute son épaisseur. Ceci permet ainsi de détecter les aspérités, de différentes profondeurs notamment, selon par exemple, l'épaisseur des revêtements 12, 13 et leurs couleurs.

Il est effectué une étape d'observation de la couche abradable 10 ainsi revêtue. Une apparition locale du premier revêtement 12 sur la face en vis-à-vis 10a de la couche abradable 10 en vis-à-vis d'une aube 2a est représentative d'une aspérité 11b nécessitant une retouche locale et une disparition locale du premier revêtement après disparition du deuxième revêtement 13 sur la face 10a en vis-à-vis de l'aube 2a est représentative d'une aspérité 11c nécessitant un remplacement local de la couche abradable 10 autour de l'aspérité 11a, 11b, 11c.

Quand une aspérité 11a, 11b, 11c est visible sur la face 10a en vis-à-vis de l'aube 2a avec le premier revêtement 12 recouvert par le deuxième revêtement 13 dans cette aspérité 10a, il est conclu à une présence d'une aspérité 11a ne nécessitant aucune retouche locale. Seul le deuxième revêtement 13 a été légèrement entamé ce qui est illustré par l'aspérité 11a la plus petite.

II est à considérer que la définition de plus de deux niveaux de profondeur d'aspérité affectant la couche abradable 10 est possible.

Dans ce cas, il est possible de prévoir autant de revêtements, avantageusement sous la forme d'une couche de peinture respective, sur la face 10a en vis-à-vis d'une aube 2a de la couche abradable 10 qu'il y a de niveaux définis.

Les premier et au moins un deuxième revêtements peuvent être sous la forme d'une couche de peinture. Une enduction de la face 10a en vis-à-vis d'une aube 2a de la couche abradable 10 par les premier et deuxième revêtements 12, 13 peut être réalisée par un procédé de type laquage ou thermolaquage à l'aide d'un bras robotique.

Selon le procédé de détection conforme à la présente invention, il est possible de détecter simultanément plusieurs aspérités de différentes profondeurs sur une même couche abradable 10 par observation de l'état des premier et deuxième revêtements 12, 13 ou de revêtements supplémentaires.

A la figure 4, les aspérités 11a, 11b, 11c ne sont pas directement en vis-à-vis de l'aube 2a de soufflante mais ceci peut aussi être possible. Dans tous les cas, il convient de procéder aux réparations des aspérités 11b, 11c correspondant à des aspérités cosmétiques majeures.

L'invention concerne un procédé de réparation d'une aspérité 11b, 11c sur une face d'une couche annulaire en matériau abradable 10 dans un carter 3 de soufflante pour une turbomachine d'aéronef.

Après qu'au moins une aspérité ait été détectée conformément à un procédé de détection tel que précédemment décrit, s'il est apparu localement une portion du premier revêtement 12 au niveau d'une aspérité 11b, de préférence au niveau du fond de l'aspérité 11b sur la face 10a de la couche abradable 10 en vis-à-vis d'une aube 2a, il est procédé à une retouche locale de l'aspérité 11b.

De plus, si le premier revêtement 12 a aussi disparu de même que le deuxième revêtement 13 au niveau d'une aspérité 11c, de préférence au niveau du fond de l'aspérité 11c, sur la face 10a de la couche abradable 10 en vis-à-vis d'une aube 2a, il est procédé à un remplacement local de la couche abradable 10 autour de l'aspérité 11c.

En se référant à toutes les figures, l'invention concerne aussi un carter 3 de soufflante pour une turbomachine d'aéronef comprenant une couche annulaire en matériau abradable 10 présentant une face en vis-à-vis séquentiellement d'une 2a des aubes d'une roue 2 à aubes de soufflante.

Comme au moins une aspérité sur la face 10a en vis-à-vis séquentiellement d'une 2a des aubes peut être, parmi d'autres possibles causes de création d'aspérités, provoquée par un effritement local de la couche en matériau abradable sur la face en vis-à-vis 10a provoquant une création sur ladite face 10a d'une aspérité 11a, 11b, 11c d'une profondeur respective 11, I2, I3 dans la couche abradable 10, le carter 3 de soufflante met en œuvre un procédé de détection d'au moins une aspérité ou un procédé de réparation tels que précédemment décrits.

Préalablement aux procédés de détection ou de réparation, des premier et deuxième niveaux N1 +N2, N2 de profondeur peuvent avoir été définis. Dans ce carter 3 de soufflante, la face 10a en vis-à-vis d'une 2a des aubes de la couche en matériau abradable 10 est recouverte par au moins deux revêtements 12, 13, avantageusement de peinture, la face la plus externe à la couche abradable 10 du deuxième revêtement formant alors la face en vis-à-vis 10a. Chaque premier 12 ou deuxième revêtement 13 présente une épaisseur respective prédéterminée précisément mesurée et un aspect physique les différenciant l'un de l'autre.

L'épaisseur N2 du deuxième revêtement 13 peut être égale au deuxième niveau de profondeur et l'épaisseur N1 du premier revêtement 12 recouvert peut être égale au premier niveau N1+N2 de profondeur minoré de l'épaisseur N2 du deuxième revêtement 13 ou des autres revêtements quand leur nombre dépasse deux.

L'aspect physique des premier et deuxième revêtements 12, 13 peut être donné par un des paramètres suivants pris unitairement ou en combinaison : une couleur, un teint, une texture.

Le premier revêtement 12 et ledit au moins un deuxième revêtement 13 peuvent, par exemple, présenter une colorimétrie différente.

Ces paramètres sont des paramètres reconnaissables visuellement pour aider à la reconnaissance de la profondeur d'une aspérité.

L'invention concerne enfin une turbomachine d'aéronef comportant un carter 3 de soufflante tel que précédemment décrit.

L'invention n'est nullement limitée aux modes de réalisation décrits et illustrés qui n'ont été donnés qu'à titre d'exemples.

## Revendications

1. Procédé de détection d'au moins une aspérité (11a, 11b, 11c) sur une face (10a) d'une couche annulaire en matériau abradable (10) dans un carter (3) de soufflante pour une turbomachine d'aéronef, **caractérisé en ce qu'**il comporte :
a) une étape de dépôt sur ladite face (10a) de la couche abradable (10) d'un premier revêtement (12) et d'au moins un deuxième revêtement (13) recouvrant le premier revêtement (12) déposé directement sur la couche abradable (10), chaque premier (12) ou deuxième revêtement (13) présentant une épaisseur (N1, N2) respective prédéterminée précisément mesurée et un aspect physique les différenciant l'un de l'autre, et
b) une étape d'observation de la couche abradable (10) ainsi revêtue, une apparition locale du premier revêtement (12) sur ladite face (10a) étant représentative d'une aspérité (11b) nécessitant une retouche locale et une disparition locale du premier revêtement (12) après disparition du deuxième revêtement (13) sur ladite face (10a) étant représentative d'une aspérité (11c) nécessitant un remplacement local de la couche abradable (10) autour de l'aspérité (11c).

2. Procédé selon la revendication précédente, dans lequel, préalablement à la mise en œuvre de l'étape de dépôt, il est procédé à une étape de définition d'un premier niveau (N1+N2) et d'au moins un deuxième niveau (N2) de profondeur d'aspérité affectant la couche abradable (10), les premier et deuxième niveaux (N1+N2, N2) de profondeur étant mesurés à partir de ladite face (10a) et représentatifs d'une nécessité, pour le premier niveau (N1+N2), d'un remplacement local de la couche abradable (10) autour de l'aspérité (11c) ou, pour le deuxième niveau (N2), d'une nécessité d'une retouche locale au niveau de l'aspérité (11b), l'épaisseur (N2) dudit au moins un deuxième revêtement (13) étant égale au deuxième niveau (N2) de profondeur et l'épaisseur (N1) du premier revêtement (12) recouvert étant égale au premier niveau (N1+N2) de profondeur minoré de l'épaisseur (N2) dudit au moins un deuxième revêtement (13),

3. Procédé selon l'une quelconque des revendications 1 ou 2, dans lequel, quand une aspérité (11a) est visible sur ladite face (10a) avec le premier revêtement (12) recouvert par le deuxième revêtement (13) dans cette aspérité (10a), il est conclu par reconnaissance visuelle à une présence d'une aspérité (11a) ne nécessitant aucune retouche locale.

4. Procédé selon l'une quelconque des revendications précédentes, dans lequel le premier niveau (N1+N2) de profondeur d'aspérité est au moins supérieur à 0,5 millimètres et le deuxième niveau (N2) de profondeur d'aspérité est au moins supérieur à 0,2 millimètres en étant inférieur à 0,5 millimètres.

5. Procédé selon l'une quelconque des revendications précédentes, dans lequel le premier revêtement (12) et ledit au moins un deuxième revêtement (13) sont sous forme d'une couche de peinture respective, une enduction de ladite face (10a) de la couche abradable (10) par les premier et deuxième revêtements (12, 13) étant réalisée par un procédé de type laquage ou thermolaquage à l'aide d'un bras robotique.

6. Procédé selon la revendication précédente, dans lequel le premier revêtement (12) et ledit au moins un deuxième revêtement (13) présentent une colorimétrie différente.

7. Procédé de réparation d'une aspérité (11b, 11c) sur une face d'une couche annulaire en matériau abradable (10) dans un carter (3) de soufflante pour une turbomachine d'aéronef, **caractérisé en ce que** ladite au moins une aspérité ayant été détectée conformément à un procédé de détection selon l'une quelconque des revendications précédentes, une apparition locale du premier revêtement (12) au niveau d'une aspérité (11b) sur ladite face (10a) est suivie par une retouche locale de l'aspérité (11b) et une disparition locale du premier revêtement (12) après disparition du deuxième revêtement (13) après disparition du deuxième revêtement (13) au niveau d'une aspérité (11c) sur ladite face (10a) est suivie d'un remplacement local de la couche abradable (10) autour de l'aspérité (11c).

8. Carter (3) de soufflante pour une turbomachine d'aéronef comprenant une couche annulaire en matériau abradable (10) **caractérisé en ce que** ladite face (10a) de la couche en matériau abradable est recouverte par au moins deux revêtements (12, 13), chaque premier (12) ou deuxième revêtement (13) présentant une épaisseur (N1, N2) respective prédéterminée précisément mesurée et un aspect physique les différenciant l'un de l'autre, permettant la mise en œuvre d'un procédé de détection d'au moins une aspérité sur ladite face (10a) de la couche abradable (10) selon l'une quelconque des revendications 1 à 6 ou d'un procédé de réparation d'une aspérité (11 b, 11 c) selon la revendication précédente.

9. Carter (3) de soufflante selon la revendication précédente, dans lequel le premier revêtement (12) et ledit au moins un deuxième revêtement (13) sont des couches de peinture, un aspect physique du premier revêtement (12) et dudit au moins un deuxième revêtement (13) étant donné par un des paramètres suivants pris unitairement ou en combinaison : une couleur, un teint ou une texture.

10. Turbomachine d'aéronef **caractérisée en ce qu'**elle comporte un carter (3) de soufflante selon l'une quelconque des revendications 8 ou 9.

## Patentansprüche

1. Verfahren zum Erfassen mindestens einer Rauheit (11a, 11b, 11c) auf einer Fläche (10a) einer ringförmigen Schicht aus abreibbarem Material (10) in einem Bläsergehäuse (3) für eine Turbomaschine eines Luftfahrzeugs, **dadurch gekennzeichnet, dass** es Folgendes umfasst:
a) einen Schritt der Ablagerung, auf der Fläche (10a) der abreibbaren Schicht (10), eines ersten Überzugs (12) und mindestens eines zweiten Überzugs (13), der den ersten Überzug (12) bedeckt, direkt auf der abreibbaren Schicht (10) abgelagert, wobei jeder erste (12) oder zweite Überzug (13) eine jeweilige vorbestimmte Dicke (N1, N2) aufweist, die genau gemessen wird, und ein physikalisches Erscheinungsbild diese voneinander unterscheidet, und
b) einen Schritt der Beobachtung der auf diese Weise überzogenen abreibbaren Schicht (10), wobei ein lokales Hervortreten des ersten Überzugs (12) auf der Fläche (10a) repräsentativ ist für eine Rauheit (11b), die eine lokale Nachbesserung erfordert, und ein lokales Verschwinden des ersten Überzugs (12) nach Verschwinden des zweiten Überzugs (13) auf der Fläche (10a) repräsentativ ist für eine Rauheit (11c), die ein lokales Auswechseln der abreibbaren Schicht (10) um die Rauheit (11c) herum erfordert.

2. Verfahren nach dem vorstehenden Anspruch, wobei vor der Ausführung des Ablagerungsschritts ein Schritt der Definition einer ersten Stufe (N1+N2) und mindestens einer zweiten Stufe (N2) von Rauheitstiefen, die die abreibbare Schicht (10) beeinflussen, vorgenommen wird, wobei die erste und die zweite Tiefenstufe (N1+N2, N2) ausgehend von der Fläche (10a) gemessen werden und repräsentativ sind für eine Notwendigkeit eines lokalen Auswechselns der abreibbaren Schicht (10) um die Rauheit (11c) herum für die erste Stufe (N1+N2), oder einer Notwendigkeit einer lokalen Nachbesserung an der Rauheit (11b) für die zweite Stufe (N2), wobei die Dicke (N2) des mindestens einen zweiten Überzugs (13) gleich der zweiten Tiefenstufe (N2) ist und die Dicke (N1) des bedeckten ersten Überzugs (12) gleich der ersten Tiefenstufe (N1+N2) abzüglich der Dicke (N2) des mindestens einen zweiten Überzugs (13) ist.

3. Verfahren nach einem der Ansprüche 1 oder 2, wobei, wenn eine Rauheit (11a) auf der Fläche (10a) sichtbar ist, bei der der erste Überzug (12) in dieser Rauheit (10a) von dem zweiten Überzug (13) bedeckt ist, anhand visueller Erkennung auf das Vorhandensein einer Rauheit (11a) geschlossen wird, die keinerlei lokale Nachbesserung erfordert.

4. Verfahren nach einem der vorstehenden Ansprüche, wobei die erste Rauheitstiefenstufe (N1+N2) mindestens größer als 0,5 Millimeter ist und die zweite Rauheitstiefenstufe (N2) mindestens größer als 0,2 Millimeter und kleiner als 0,5 Millimeter ist.

5. Verfahren nach einem der vorstehenden Ansprüche, wobei der erste Überzug (12) und der mindestens eine zweite Überzug (13) in Form einer jeweiligen Farbanstrichschicht vorliegen, wobei eine Beschichtung der Fläche (10a) der abreibbaren Schicht (10) durch den ersten und den zweiten Überzug (12, 13) mithilfe eines robotergesteuerten Arms durch ein Verfahren vom Lackier- oder Wärmelackiertyp durchgeführt wird.

6. Verfahren nach dem vorstehenden Anspruch, wobei der erste Überzug (12) und der mindestens eine zweite Überzug (13) eine unterschiedliche Kolorimetrie aufweisen.

7. Verfahren zum Reparieren einer Rauheit (11b, 11c) auf einer Fläche einer ringförmigen Schicht aus abreibbarem Material (10) in einem Bläsergehäuse (3) für eine Turbomaschine eines Luftfahrzeugs, **dadurch gekennzeichnet, dass** die mindestens eine Rauheit in Übereinstimmung mit einem Erfassungsverfahren nach einem der vorstehenden Ansprüche erfasst wurde, wobei ein lokales Hervortreten des ersten Überzugs (12) an der Rauheit (11b) auf der Fläche (10a) von einer lokalen Nachbesserung der Rauheit (11b) gefolgt wird und ein lokales Verschwinden des ersten Überzugs (12) nach Verschwinden des zweiten Überzugs (13) nach Verschwinden des zweiten Überzugs (13) an der Rauheit (11c) auf der Fläche (10a) von einem lokalen Auswechseln der abreibbaren Schicht (10) um die Rauheit (11c) herum gefolgt wird.

8. Bläsergehäuse (3) für eine Turbomaschine eines Luftfahrzeugs, umfassend eine ringförmige Schicht aus abreibbarem Material (10), **dadurch gekennzeichnet, dass** die Fläche (10a) der Schicht aus abreibbarem Material von mindestens zwei Überzügen (12, 13) bedeckt ist, wobei jeder erste (12) oder zweite Überzug (13) eine jeweilige vorbestimmte Dicke (N1, N2) aufweist, die genau gemessen wird, und ein physikalisches Erscheinungsbild diese voneinander unterscheidet, wodurch der Einsatz eines Verfahrens zum Erfassen mindestens einer Rauheit auf der Fläche (10a) der abreibbaren Schicht (10) nach einem der Ansprüche 1 bis 6 oder ein Verfahren zum Reparieren einer Rauheit (11b, 11c) nach dem vorstehenden Anspruch ermöglicht wird.

9. Bläsergehäuse (3) nach dem vorstehenden Anspruch, wobei der erste Überzug (12) und der mindestens eine zweite Überzug (13) Farbanstrichschichten sind und ein physikalisches Erscheinungsbild des ersten Überzugs (12) und des mindestens einen zweiten Überzugs (13) durch einen der folgenden Parameter, einzeln oder kombiniert genommen, vorgegeben wird: eine Farbe, ein Farbton und eine Textur.

10. Turbomaschine eines Luftfahrzeugs, **dadurch gekennzeichnet, dass** sie das Bläsergehäuse (3) nach einem der Ansprüche 8 oder 9 umfasst.

## Claims

1. A method for detecting at least one roughness (11a, 11b, 11c) in a face (10a) of an annular layer of abradable material (10) in a fan casing (3) for an aircraft turbomachine, **characterized in that** it comprises:
a) a step of depositing on said face (10a) of the abradable layer (10) a first coating (12) and at least one second coating (13) covering the first coating (12) deposited directly on the abradable layer (10), each first (12) or second coating (13) having a precisely measured predetermined respective thickness (N1, N2) and a physical aspect differentiating them from each other, and
b) a step of observing the abradable layer (10) thus coated, a local appearance of the first coating (12) on said face (10a) being representative of a roughness (11b) requiring a local touch-up and a local disappearance of the first coating (12) after disappearance of the second coating (13) on said face (10a) being representative of a roughness (11c) requiring a local replacement of the abradable layer (10) around the roughness (11c).

2. The method according to the preceding claim, wherein, prior to the implementation of the deposition step, a step of defining a first level (N1+N2) and at least a second level (N2) of roughness depth affecting the abradable layer (10) is conducted, the first and second depth levels (N1+N2, N2) being measured from said face (10a) and being representative of a need, for the first level (N1+N2) of a local replacement of the abradable layer (10) around the roughness (11c) or, for the second level (N2), of a need for a local touch-up at the level of the roughness (11b), the thickness (N2) of said at least one second coating (13) being equal to the second level (N2) of depth and the thickness (N1) of the first covered coating (12) being equal to the first level (N1+N2) of depth minus the thickness (N2) of said at least one second coating (13).

3. The method according to any one of claims 1 or 2, wherein, when a roughness (11a) is visible on said face (10a) with the first coating (12) covered by the second coating (13) in that roughness (10a), it is concluded by visual recognition that a roughness (11a) is present which does not require any local touch-up.

4. The method according to any one of the preceding claims, wherein the first level (N1+N2) of roughness depth is at least greater than 0.5 millimeters and the second level (N2) of roughness depth is at least greater than 0.2 millimeters and less than 0.5 millimeters.

5. The method according to any one of the preceding claims, wherein the first coating (12) and said at least one second coating (13) are in the form of a respective paint layer, a surface application on said face (10a) of the abradable layer (10) with the first and second coatings (12, 13) being carried out by a lacquering or powder coating type method with the aid of a robot arm.

6. The method according to the preceding claim, wherein the first coating (12) and said at least one second coating (13) have a different colorimetry.

7. A method for repairing a roughness (11b, 11c) in a face of an annular layer of abradable material (10) in a fan casing (3) for an aircraft turbomachine, **characterized in that** said at least one roughness having been detected in accordance with a detection method according to any one of the preceding claims, a local appearance of the first coating (12) at the level of a roughness (11b) on said face (10a) is followed by a local touch-up of the roughness (11b) and a local disappearance of the first coating (12) after disappearance of the second coating (13) after disappearance of the second coating (13) at the level of a roughness (11c) on said face (10a) is followed by a local replacement of the abradable layer (10) around the roughness (11c).

8. A fan casing (3) for an aircraft turbomachine comprising an annular layer of abradable material (10), **characterized in that** said face (10a) of the layer of abradable material is covered by at least two coatings (12, 13), each first (12) or second coating (13) having a precisely measured predetermined respective thickness (N1, N2) and a physical aspect differentiating them from each other, so as to implement a method for detecting at least one roughness in said face (10a) of the abradable layer (10) according to any of claims 1 to 6 or a method for repairing a roughness (11b, 11c) according to the preceding claim.

9. The fan casing (3) according to the preceding claim, wherein the first coating (12) and said at least one second coating (13) are paint layers, a physical aspect of the first coating (12) and said at least one second coating (13) being given by one of the following parameters taken individually or in combination: a color, a tone or a texture.

10. An aircraft turbomachine, **characterized in that** it comprises a fan casing (3) according to any of claims 8 or 9.
